(19) Europäisches Patentamt
European Patent Office
Office européen des brevets

(11) EP 0 800 554 B1

(12) EUROPÄISCHE PATENTSCHRIFT

(45) Veröffentlichungstag und Bekanntmachung des Hinweises auf die Patenterteilung:
**10.03.1999 Patentblatt 1999/10**

(21) Anmeldenummer: **95941725.4**

(22) Anmeldetag: **19.12.1995**

(51) Int Cl.[6]: **C08L 53/02**

(86) Internationale Anmeldenummer:
**PCT/EP95/05024**

(87) Internationale Veröffentlichungsnummer:
**WO 96/20248 (04.07.1996 Gazette 1996/30)**

(54) **SCHLAGZÄHE, THERMOPLASTISCH VERARBEITBARE MISCHUNG AUS ELASTOMEREN UND THERMOPLASTEN**

IMPACT-RESISTANT, THERMOPLASTIC MIXTURE OF ELASTOMERS AND THERMOPLASTIC MATERIALS

MELANGE THERMOPLASTIQUE D'ELASTOMERES ET DE MATIERES THERMOPLASTIQUES RESISTANT AUX CHOCS

(84) Benannte Vertragsstaaten:
**BE DE ES FR GB IT NL**

(30) Priorität: **27.12.1994 DE 4446896**

(43) Veröffentlichungstag der Anmeldung:
**15.10.1997 Patentblatt 1997/42**

(73) Patentinhaber: **BASF AKTIENGESELLSCHAFT**
**67056 Ludwigshafen (DE)**

(72) Erfinder:
- **NIESSNER, Norbert**
  **D-67159 Friedelsheim (DE)**
- **KNOLL, Konrad**
  **D-67069 Ludwigshafen (DE)**
- **BENDER, Dietmar**
  **D-67459 Böhl-Iggelheim (DE)**
- **GOTTSCHALK, Axel**
  **D-67435 Neustadt (DE)**
- **WEBER, Martin**
  **D-67433 Neustadt (DE)**

(56) Entgegenhaltungen:
**EP-A- 0 270 515** **DE-A- 2 009 407**
**FR-A- 2 279 807**

EP 0 800 554 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft Polymermischungen, enthaltend

P1) 0.1-99.9 Gew. % eines kautschukelastischen Block-copolymerisates aus 35 bis 85 Gew.-% an vinylaromatischem Monomer und 15 bis 65 Gew.-% Dien, wobei P1

α mindestens zwei Blöcke S, die einpolymerisierte Einheiten eines vinylaromatischen Monomeren und eine Glastemperatur über 25°C aufweisen und

β mindestens einen, zwischen den Blöcken S befindlichen, elastomeren Block B/S, der sowohl einpolymerisierten Einheiten eines vinylaromatischen Monomeren (S) als auch eines Diens (B) enthält, mit statistischem Aufbau und einer Glastemperatur Tg von -50 bis +25°C,

enthält,
und wobei die im Festkörper aus den Blöcken S gebildete Hartphase 1 - 40 Vol.-%, und die aus den Blöcken B/S gebildete Weichphase 60 - 99 Vol.-% betragen,

P2) 0.1 - 99.9 Gew.-% mindestens eines thermoplastisch verarbeitbaren oder duroplastischen Polymeren oder deren Mischungen und

P3) 0 - 70 Gew.-% weiterer Zusatzstoffe und Verarbeitungshilfsmittel, wobei die Gewichtsprozente der Komponenten P1) bis P3) zusammen 100 % ergeben.

Weiterhin betrifft die Erfindung die Verwendung der erfindungsgemäßen Polymermischungen zur Herstellung von Formkörpern jeglicher Art und die hierbei erhältlichen Formkörper.

Polymere, insbesondere Thermoplaste, welche kautschukelastische Polymerisate enthalten, sind seit langem bekannt. Insbesondere Blockcopolymere aus vinylaromatischen Polymeren (z.B. Styrol) und Dienen (z.B. Butadien) werden hierbei als sogenannte Schlagzähmodifier eingesetzt, wobei der Dienanteil des Blockcopolymeren partiell oder vollständig hydriert sein kann.

Derartige Schlagzähmodifier für Polyphenylenether/Polyamid-Blends sind u.a. aus der EP-A 234 063 bekannt. Aus der EP-A 236 593 sind PPE/PA-Blends bekannt, welche mehrere Schlagzähmodifier enthalten, wobei entweder die Polyamid- oder die PPE-Phase schlagzähmodifiziert vorliegen.

Hydrierte Zweiblockkautschuke aus Polystyrol- und hydrierten Polyisoprenblöcken sind aus der WO 87/5311 bekannt.

Aus der DE-A 41 29 499 sind AB-A'-B'-Blockcopolymerisate als Schlagzähmodifier bekannt.

Ähnliche Abmischungen mit anderen Thermoplasten wie Polyamid oder Polyester etc. sind hinreichend bekannt, wobei durch Veränderungen des Blockcopolymeren der Mischung im wesentlichen eine Erhöhung der Schlagzähigkeit der Polymermischungen erzielt wird. Eine Erhöhung der Schlagzähigkeit ist innerhalb bestimmter Grenzen ebenso durch eine Erhöhung der Menge des Schlagzähmodifiers in der Mischung möglich, wobei jedoch andere mechanischen Eigenschaften wie Steifigkeit und Festigkeit verringert werden.

Ein weiterer Nachteil der bislang bekannten schlagzähmodifizierten Polymermischungen ist eine zu große Schwindung bei der Verarbeitung zu Formkörpern, d.h. die Dimensionen des Formteils ändern sich nach dem Abkühlen in unreproduzierbarem Maß.

In der jüngeren DE-A 44 20 952 werden neuartige Blockcopolymere vorgeschlagen, welche kautschukelastisches Verhalten zeigen und bei einem niedrigen Diengehalt ein Maximum an Zähigkeit aufweisen. Diese sind großtechnisch einfach herstellbar und wie Thermoplaste z.B. auf Extrudern einfach zu verarbeiten.

Aufgabe der vorliegenden Erfindung war es daher, schlagzähmodifizierte Polymermischungen zur Verfügung zu stellen, welche verbesserte mechanische Eigenschaften wie eine bessere Zähigkeit, insbesondere unter Erhalt der Steifigkeit und Festigkeit, aufweisen.

Bei der Verarbeitung derartiger Polymermischungen soll insbesondere die Schwindung der Formkörper verbessert werden. Gleichzeitig sollen andere wesentliche Eigenschaften wie die Fließfähigkeit der Schmelze oder die Wärmeformbeständigkeit erhalten bzw. verbessert werden.

Erfindungsgemäß wird diese Aufgabe durch die eingangs definierten Polymermischungen gelöst.

Bevorzugte Ausführungsformen sind den Unteransprüchen zu entnehmen.

Als Komponente P1) enthalten die erfindungsgemäßen Polymermischungen 0,1 bis 99, bevorzugt 1 bis 99 Gew.-% eines Kautschukelastischen Blockcopolymerisats P1 aus

P1) 0.1-99.9 Gew. % eines kautschukelastischen Blockcopolymerisates aus 35 bis 85 Gew.-% an vinylaromatischem Monomer und 15 bis 65 Gew.-% Dien, wobei P1

α mindestens zwei Blöcke S, die einpolymerisierte Einheiten eines vinylaromatischen Monomeren und eine Glastemperatur über 25°C aufweisen und

β mindestens einen, zwischen den Blöcken S befindlichen, elastomeren Block B/S, der sowohl einpolymerisierten Einheiten eines vinylaromatischen Monomeren (S) als auch eines Diens (B) enthält, mit statistischem Aufbau und einer Glastemperatur Tg von -50 bis +25°C,

enthält,
und wobei die im Festkörper aus den Blöcken S gebildete Hartphase 1 - 40 Vol.-%, und die aus den Blöcken B/S gebildete Weichphase 60 - 99 Vol.-% betragen.

In erfindungsgemäßen Polymermischungen, welche Thermoplaste als Komponente P2) enthalten, werden blockcopolymerisate P1 vorzugsweise als Schlagzähmodifier eingesetzt, deren Anteil bis zu 40 Gew.-%, vorzugsweise bis zu 20 Gew.-%, bezogen auf P1) bis P3) betragen kann.

Je nach Anwendung sind jedoch beliebige Mischungsverhältnisse mit der Komponente P2 möglich.

Blockcopolymere von Vinylaromaten (z.B. Styrol) und Dienen (z.B. Butadien) sind Copolymere aus mehreren aneinandergereihten oder in anderer Form verknüpften Polymermolekül-Bereichen (sog. Blökken), die in sich mehr oder weniger einheitlich aufgebaut sind. Sie können je nach Struktur und Gehalt an Dienmonomeren - bei einer bestimmten Temperatur - insgesamt elastomere, d.h. kautschukelastische Eigenschaften oder steife, nicht-kautschukelastische Eigenschaften haben, d.h. sie verhalten sich nach außen hin insgesamt entweder kautschukelastisch, ähnlich wie ein Polydien und haben z.B. als sog. SB-Rubber Bedeutung, oder wie transparente, schlagzähe Styrolpolymere. Es ist üblich, in Anlehnung an die Bezeichnungen beim schlagzäh modifizierten Polystyrol diejenigen Molekülteile, die das kautschukelastische Verhalten bestimmen, als Weichphase und die starren Molekülteile (den reinen Polystyrolanteil) als Hartphase zu bezeichnen. SB-Rubber können nicht wie Thermoplaste verarbeitet werden, sondern müssen wie gewöhnliche Dienpolymere zum Gebrauch vulkanisiert werden, was ihre Verwendung stark einschränkt.

Die zu sog. lebenden Polymeren (living polymers) führende anionische Polymerisation, bei der das Wachstum eines Kettenmoleküls an einem Kettenende stattfindet, das mangels spontaner Kettenabbruch- oder übertragungsreaktion theoretisch beliebig lange lebt (polymerisationsfähig bleibt), und die Umsetzung des lebenden Polymeren mit ein- oder mehrfunktionellen Reaktionspartnern bietet bekanntlich eine vielseitig verwendbare Möglichkeit zum Aufbau von Blockcopolymeren, wobei die Auswahl an Monomeren allerdings beschränkt ist; in der Praxis haben nur Blockcopolymere von vinylaromatischen Verbindungen, also Styrol und seinen Abkömmlingen einerseits und Dienen, im wesentlichen Butadien oder Isopren andererseits Bedeutung erlangt. Blockcopolymere erhält man dadurch, daß jeweils bis annähernd zur Erschöpfung eines Monomerenvorrats polymerisiert und das oder die Monomeren dann gewechselt werden. Dieser Vorgang ist mehrfach wiederholbar.

Lineare Blockcopolymere werden z.B. in den US-PSen 3 507 934 und 4 122 134 beschrieben. Sternförmige Blockcopolymere sind z.B aus den US-PSen 4 086 298; 4 167 545 und 3 639 517 bekannt.

Das Eigenschaftsprofil dieser Blockcopolymeren wird wesentlich durch den Gehalt einpolymerisierter Dienmonomerer, d.h. Länge, Anordnung und Mengenverhältnis von Polydien- und Polystyrol-Blökken geprägt. Darüberhinaus spielt die Art und Weise des Übergangs zwischen unterschiedlichen Blöcken eine wichtige Rolle: Man kennt scharfe und sog. verschmierte (tapered) Übergänge, je nachdem, ob der Monomerenwechsel abrupt oder allmählich stattfindet. Im letzteren Fall tritt eine mehr oder weniger statistische Sequenzlängenverteilung auf.

Blockcopolymere mit scharf getrennten Blöcken sind bei identischem Molekulargewicht und Dienanteil weniger zäh als solche mit verschmiertem Blockübergang. Will man zu zäheren Blockcopolymeren gelangen, wird man folglich Blockübergänge mit statistischer Sequenzlängenverteilung von Dien- und Vinylaromaten im Übergangsbereich bevorzugen (vgl. US-PS 4 122 134 und EP-A-0 316 671).

Bei morphologischen Untersuchungen von Blockcopolymeren zeigt sich nun, daß bei verschmiertem Blockübergang die sequenzlänge der reinen Dienphase gegenüber der Polystyrolphase und somit das Volumenverhältnis zugunsten der Dienphase verschoben ist. Durch die Art des Blockübergangs läßt sich also die Zähigkeit eines Polymerisats steigern, ohne daß der Diengehalt erhöht werden muß. Dies kann vorteilhaft sein, da mit wachsendem Diengehalt die Fließfähigkeit der Schmelze und die Thermostabilität der Polymeren abnimmt und die Gefahr der Vernetzung der Dienphase zunimmt. Bei Spritzguß- und Extrusionsverarbeitung macht sich die Vernetzung durch sog. Stippen und Trübungen im Polymerisat bemerkbar.

Die Erzielung verschmierter Blockübergänge durch gesteuerten Wechsel der Monomerenzugabe ist nun technisch aufwendig und führt zu einer längeren Reaktionsdauer bzw. geringerer Raum-Zeit-Ausbeute, was die Herstellungskosten erhöht. Im Grenzfall, der kontinuierlich gesteuerten Zugabe (vgl. US-PS 4 346 198 und 4 248 984) nimmt

die Umsetzungsdauer wegen der ungünstigen Lage der Copolymerisationsparameter von Vinylaromaten und Dienen extrem zu und man gewinnt nur Polymere mit inhomogener Verteilung der Dien- und Vinylaromaten-Einheiten im Bereich des Blockübergangs, was-sich wie eine Vermehrung der Zahl der Übergänge auswirkt. Deutlich wird dies durch eine niedrige Glastemperatur ($T_g$ unterhalb von -50°C, vgl. US-PS 4 346 198, Beispiel 1) und schlechte Verarbeitungseigenschaften.

Besonders Materialien mit einem Dien-Gehalt von über 35 Gew.%, die aufgrund ihres Eigenschaftsprofils (Zähigkeit, Transparenz, Gasdurchlässigkeit) für medizintechnische Anwendungen wie Infusionsschläuche, Infusionstropfkammern und Dehnfolien geeignet wären, sind nur sehr schwierig durch Profilextrusion, Spritzguß oder Schlauchfolienextrusion zu verarbeiten; sie sind auch trotz Stabilisierung mit Antioxidantien und Radikalfängern thermisch sehr empfindlich und neigen zur Klebrigkeit, so daß man sich aufwendig mit Additiven behelfen muß. Das sog. Blocken (Verkleben von Folien und Schläuchen auf der Rolle) und schlechte Entformbarkeit können die Verarbeitung durch Spritzguß gänzlich unmöglich machen.

Die Blockcopolymerisate P1 sind dadurch ausgezeichnet, daß man in einem Vinylaromat-Dien-Blockcopolymerisat aus Blöcken, die eine Hartphase (Blocktyp S) und solchen, die eine Weichphase bilden, an die Stelle eines reinen Polydienblocks als Weichphase einen Block B/S aus Dien- und Vinylaromaten-Einheiten treten läßt, der statistischen Aufbau besitzt. Der Aufbau kann dabei entlang der Kette im statistischen Mittel homogen oder inhomogen sein.

Man erhält ein solches erfindungsgemäßes kautschukelastisches Blockcopolymerisat dadurch, daß im Rahmen der vorstehenden Parameter die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäßes Blockcopolymerisat kann z.B. durch eine der allgemeinen Formeln 1 bis 11 dargestellt werden:

(1) $(S\text{-}B/S)_n$;

(2) $(S\text{-}B/S)_n\text{-}S$;

(3) $B/S\text{-}(S\text{-}B/S)_n$;

(4) $X\text{-}[(S\text{-}B/S)_n]_m+1$;

(5) $X\text{-}[(B/S\text{-}S)_n]_m+1$;

(6) $X\text{-}[(S\text{-}B/S)_n\text{-}S]_m+1$;

(7) $X\text{-}[(B/S\text{-}S)_n\text{-}B/S]_m+1$;

(8) $Y\text{-}[(S\text{-}B/S)_n]_m+1$;

(9) $Y\text{-}[(B/S\text{-}S)_n]_m+1$;

(10) $Y\text{-}[(S\text{-}B/S)_n\text{-}S]_m+1$;

(11) $Y\text{-}[(B/S\text{-}S)_n\text{-}B/S]_m+1$;

wobei

S für deneinen vinylaromatischen Block,
B/S für die Weichphase aus einem statistisch aus Dien- und vinylaromatischen Einheiten aufgebauten Block steht,
X den Rest eines n-funktionellen Initiators,
Y den Rest eines m-funktionellen Kopplungsmittels und
m, n natürliche Zahlen von 1 bis 10 bedeuten.

Bevorzugt ist ein Blockcopolymerisat einer der allgemeinen Formeln S-B/S-S, X-[-B/S-S]$_2$ und Y-[-B/S-S]$_2$ (Bedeutung der Abkürzungen wie vorstehend) und besonders bevorzugt ein Blockcopolymerisat, dessen Weichphase unterteilt ist in Blöcke

(12) $(B/S)_1$-$(B/S)_2$;

(13) $(B/S)_1$-$(B/S)_2$-$(B/S)_1$;

(14) $(B/S)_1$-$(B/S)_2$-$(B/S)_3$;

wobei die Indices 1,2,3 für unterschiedliche Strukturen in dem Sinne stehen, daß das vinylaromat/Dien-Verhältnis in den einzelnen Blöcken B/SA unterschiedlich ist oder sich innerhalb eines Blocks in den Grenzen $(B/S)_1(B/S)_2$ kontinuierlich ändert, wobei die Glasübergangstemperatur $T_g$ jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Bevorzugt als vinylaromatische Verbindung im Sinne der Erfindung ist Styrol und ferner α-Methylstyrol und Vinyltoluol oder Diphenylethylen sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen äquivalente von Styrol und Butadien muß man ggf. die Angaben entsprechend umrechnen.

Vorzugsweise wird aus 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/Butadien bei 15 - 65 Gew.-%, derjenige der vinylaromatischen Komponente entsprechend bei 85 - 35 Gew.-%. Besonders bevorzugt sind Butadien-Styrol-Blockcopolymere mit einer Monomerzusammensetzung aus 25 - 60 Gew.% Dien und 75 - 40 Gew.% an vinylaromatischer Verbindung.

Die Blockcopolymeren P1) sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe wie Cyclohexan oder Methylcyclohexan verwendet. Als Lewis-Basen werden polare aprotische Verbindungen wie Ether und tertiäre Amine bevorzugt. Beispiele für besonders effektive Ether sind Tetrahydrofuran und aliphatische Polyether wie Diethylenglycoldimethylether. Als tert. Amine sind Tributylamin und Pyridin zu nennen. Das polare Cosolvens wird dem dem unpolaren Lösungsmittel in einer geringen Menge, z.B. von 0.5 - 5 Vol.% zugesetzt. Besonders bevorzugt ist Tetrahydrofuran in einer Menge von 0.1 - 0.3 Vol -% . Erfahrungsgemäß kommt man mit einer Menge von etwa 0.2 Vol.-% in den meisten Fällen aus.

Durch die Dosierung und Struktur der Lewis-Base werden die Copolymerisationsparameter und der Anteil an 1,2- bzw 1,4-Verknüpfungen der Dieneinheiten bestimmt. Die erfindungsgemäßen Polymeren haben z.B. einen Anteil von 15 - 40 % an 1,2-Verknüpfungen und 85 - 60 % an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek.

Butyllithium und tert. Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0.002 bis 5 Mol % , wenn man sie auf die Monomeren bezieht.

Die Polymerisationstemperatur kann zwischen 0 und 130°C betragen. Bevorzugt wird der Temperaturbereich zwischen 30 und 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 - 99, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend 1-40, bevorzugt 10-30 und besonders bevorzugt 10-20 Vol-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus der B/S-Blöcken gebildeten Weichphase und dem Anteil an Dieneinheiten in der Weichphase, der für die Kombination Styrol/Butadien zwischen 25 und 70 Gew.% liegt.

Durch die den statischen Einbau der vinylaromatischen Verbindungen in den Weichblock des Blockcopolymeren und die Verwendung von Lewis-Basen während der polymerisation wird die Glasübergangstemperatur ($T_g$) beeinflußt. Die Glasübergangstemperatur des Weichblockes beträgt vorzugsweise -50 bis +25°C, bevorzugt -50 bis +5°C.

Die Glastemperatur der Hartphase S des Blockcopolymerisates P1 liegt über +25°C, bevorzugt über +50°C.

Das Molekulargewicht des Blocks S beträgt vorzugsweise 1000 bis 200.000, bevorzugtinsbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Bevorzugte Polymerstrukturen sind S-B/S-S, $X\text{-}[\text{-}B/S\text{-}S]_2$ und $Y\text{-}[\text{-}B/S\text{-}S]_2$, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, daß auch bei einem Zusammensetzungsgradienten innerhalb eines Teilblocks Bn/Sn, wie er sich in der anionischen Polymerisation unter praktischen Bedingungen nur schwer vermeiden läßt (s.u.), sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur $T_g$ absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/S-Blöcke eine Restzähigkeit behält und nicht vollständig versprödet.

Die erfindungsgemäßen Blockcopolymeren besitzen ein dem Weich-PVC sehr ähnliches Eigenschaftsspektrum, können jedoch vollkommen frei von migrationsfähigen, niedermolekularen Weichmachern hergestellt werden. Sie zeichnen sich durch eine hohe Sauerstoffpermeation $P_o$ und Wasserdampfpermeation $P_w$ von über 2.000 [$cm^3 \cdot 100\ \mu m/m^2 \cdot d \cdot bar$] bzw. über 10 [$g\ 100\ \mu m/m^2 \cdot d \cdot bar$] aus, wobei $P_o$ die Sauerstoffmenge in $cm^3$ bzw. $P_w$ die Wasserstoffmenge in Gramm angibt, die durch 1 $m^2$ Folie mit einer Normdicke von 100 µm je Tag und je bar Partialdruckdifferenz hindurchtreten.

Die Polymerisation wird vorzugsweise mehrstufig durchgeführt und bei monofunktioneller Initiierung z.B. mit der Herstellung des Hartblocks S begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozeß bis zu einem hohen Umsatz (über 99%) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base sowie die Temperatur wird der statistische Aufbau und die Zusammensetzung des Blocks B/S bestimmt. Erfindungsgemäß nimmt das Dien relativ zur Gesamtmasse einschließlich vinylaromatischer Verbindung einen Gewichtsanteil von 25% bis 70% ein. Anschließend kann Block S durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der B/S-Block aufgebaut, gefolgt vom S-Block.

Die weitere Aufarbeitung erfolgt nach den üblichen Verfahren. Es empfiehlt sich, dabei in einem Rührkessel zu arbeiten und mit einem Alkohol wie Isopropanol die Carbanionen zu protonieren, vor der weiteren Aufarbeitung in üblicher weise mit $CO_2$/Wasser schwach sauer zu stellen, das Polymer mit einem Oxidationsinhibitor und einem Radikalfänger (handelsübliche Produkte wie Trisnonylphenylphosphit (TNPP) oder $\alpha$-Tokopherol (Vitamin E) bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren. Das Granulat kann wie andere Kautschuksorten mit einem Antiblockmittel wie Acrawax®, Besquare® oder Aerosil® gegen Verkleben geschützt werden.

Die erfindungsgemäßen Formmassen enthalten als wesentliche Komponente mindestens ein thermoplastisches oder duroplastisches Polymer P2), dessen Gewichtsanteil, bezogen auf das Gesamtgewicht der Formmassen bis zu 99,9 Gew.-% betragen kann, vorzugsweise bis 5 zu 99 Gew.-%.

Grundsätzlich zeigen sich die vorteilhaften Effekte bei den erfindungsgemäßen Mischungen bei Kunststoffen jeglicher Art. Eine Aufzählung geeigneter Thermoplaste und Duroplaste findet sich beispielsweise im Kunststoff-Taschenbuch (Hrsg. Saechtling), Auflage 1989, wo auch Bezugsquellen genannt sind. Verfahren zur Herstellung solcher thermoplastischer oder duroplastischer Kunststoffe sind dem Fachmann an sich bekannt. Nachstehend seien einige bevorzugte Kunststoffarten etwas näher erläutert.

Polyoxymethylenhomo- oder -copolymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

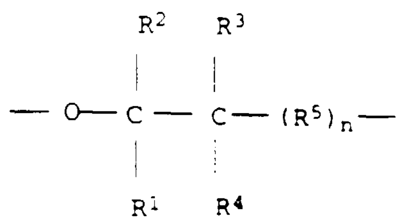

enthalten, wobei $R^1$ bis $R^4$ unabhängig voneinander ein Wasserstoffatom, eine C1- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

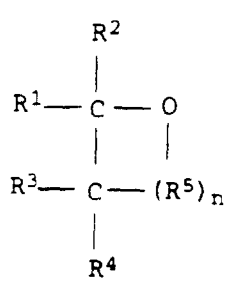

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

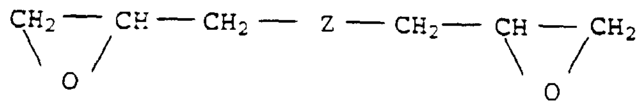

wobei Z eine chemische Bindung, -O-, -ORO- (R= $C_1$- bis $C_8$-Alkylen oder $C_2$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol,Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

Als Poly(meth)acrylate seien insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von der BASF Aktiengesellschaft oder Plexiglas® von Röhm GmbH erhältlich sind.

Teilkristalline, bevorzugt lineare Polyamide wie Polyamid-6, Polyamid-6,6, Polyamid-4,6, Polyamid-6,12 und teilkristalline Copolyamide auf Basis dieser Komponenten sind geeignet. Weiter können teilkristalline Polyamide eingesetzt werden, deren Säurekomponente ganz oder teilweise aus Adipinsäure und/oder Terephthalsäure und/oder

Isophthalsäure und/oder Korksäure und/ oder Sebacinsäure und/oder Acelainsäure und/oder Dodecandicarbonsäure und/oder einer Cyclohexandicarbonsäure besteht, und deren Diaminkomponente ganz oder teilweise insbesondere aus m und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip bekannt sind (vgl. Encyclopedia of Polymers, Vol. 11, S. 315 ff.).

Die Molekulargewichte $M_n$ (Zahlenmittel) der als Komponente P2 geeigneten Polyamide liegen bevorzugt im Bereich zwischen 5.000 und 100.000, besonders bevorzugt zwischen 10.000 und 80.000.

Geeignet sind teilkristalline lineare Polyamide z.B. mit einer relativen Viskosität von 2,2 bis 4,5, gemessen in 0,5%iger Lösung (0,5 g/100 ml) in 96 gew.-%iger Schwefelsäure bei 25°C. Bevorzugt sind Polyamide, die sich ganz oder teilweise von Lactamen mit 7 bis 13 Ringgliedern ableiten, wie Polycaprolactam, Polycapryllactam oder Polylaurinlactam.

Geeignet sind ferner Polyamide, die durch Umsetzung von Dicarbonsäuren mit einem oder mehreren Diaminen erhalten werden. Geeignete Dicarbonsäuren sind beispielsweise Alkandicarbonsäuren mit 6 bis 12, insbesondere 6 bis 10 Kohlenstoffatomen, insbesondere Adipinsäure. Geeignete Diamine sind beispielsweise Alkan- oder Cycloalkandiamine mit 4 bis 12, insbesondere 4 bis 8 Kohlenstoffatomen; Hexamethylendiamin, m-Xylylendiamin, Bis(4-aminophenyl)methan, Bis(4-aminocyclohexyl)methan oder Bis(4-aminophenyl)propan-2,2 oder deren Mischungen sind besonders geeignete Partner zur Herstellung solcher Polyamide. Es kann vorteilhaft sein, die genannten Polyamide für sich herzustellen und deren Mischungen zu verwenden.

Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel $-[-NH-(CH_2)_4-NH-CO-(CH_2)_4-CO-]-$ aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A-38 094, EP-A-38 582 und EP-A-39 524 beschrieben.

Ebenfalls geeignet sind Polyamide mit geringem Anteil, vorzugsweise bis etwa 10 Gew.-%, an anderen einkondensierbaren Bestandteilen, insbesondere anderen Amidbildnern wie beispielsweise $\alpha,\omega$-Aminosäuren oder N-Carbonsäure-anhydriden (Leuchs-anhydriden) von Aminosäuren.

Nach einer bevorzugten Ausgestaltung der Erfindung enthalten die erfindungsgemäßen Formmassen als Komponente P2 ein teilaromatisches Copolyamid mit dem nachstehend beschriebenen Aufbau.

Bevorzugte teilaromatische Copolyamide P2 enthalten als Komponente P21: 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren kann durch Isophthalsäure oder andere aromatische Dicarbonsäuren ersetzt werden, vorzugsweise solche, in denen die Carboxylgruppen in para-Stellung stehen.

Neben den Einheiten, die sich von Terephthalsäure und Hexamethylendiamin ableiten, enthalten die teilaromatischen Copolyamide Einheiten, die sich von ε-Caprolactam ableiten (P22) und/oder Einheiten, die sich von Adipinsäure und Hexamethylendiamin (P23) ableiten.

Der Anteil an Einheiten, die sich von ε-Caprolactam ableiten, beträgt bis zu 50 Gew. -%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Der Schmelzpunkt besonders geeigneter teilaromatischer Copolyamide liegt z.B. im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei einem Gehalt von etwa 70 Gew.-% an Einheiten, die sich von Terephthalsäure und Hexamethylendiamin ableiten, einen Schmelzpunkt im Bereich von 300°C und eine Glasübergangstemperatur von mehr als 110°C auf.

Binäre Copolyamide auf der Basis von Terephthalsäure, Adipinsäure und Hexamethylendiamin erreichen bereits bei einem Gehalt von etwa 55 Gew.-% Einheiten aus Terephthalsäure und Hexamethylendiamin einen Schmelzpunkt von 300°C und mehr, wobei die Glasübergangstemperatur nicht ganz so hoch liegt wie bei binären Copolyamiden, die ε-Caprolactam anstelle von Adipinsäure bzw. Adipinsäure/Hexamethylendiamin enthalten.

Geeignete teilaromatische Copolyamide können nach den in den EP-A-129 195 und EP-A-129 196 beschriebenen Verfahren hergestellt werden.

Erfindungsgemäß können als Komponente P2 ferner amorphe Polyamide verwendet werden. Basierend auf den bereits genannten Monomeren werden noch zusätzliche, häufig mit einer oder mehreren, die Kristallisation behindernden Seitengruppen versehene Monomere einkondensiert. Als Resultat erhält man ein in der Regel transparentes Polyamid.

Beispiele für Polymerisate, die sich als Komponente P2 der erfindungsgemäßen Formmassen eignen, sind weiterhin teilkristalline Polyolefine, vorzugsweise Homo- und Copolymerisate von Olefinen wie Ethylen, Propylen, Buten-1, Penten-1, Hexen-1, Hepten-1, 3-Methylbuten-1, 4-Methylbuten-1, 4-Methylpenten-1 und Octen-1. Geeignete Polyolefine sind demnach z.B. Polyethylen, Polypropylen, Polybuten-l oder Poly-4-methylpenten-1. Allgemein unterscheidet man bei Polyethylen (PE) High-Density-PE (HDPE), Low-Density-PE (LDPE) und linear-low-density-PE (LLDPE).

Bevorzugt als Komponente P2 geeignete Polyolefine sind Polyethylen, Polypropylen und Poly-4-methylpenten-1, insbesondere Polyethylen und Polypropylen. Die Polyolefine können neben den Olefinen auch noch untergeordnete Mengen anderer Monomerer enthalten. Besonders geeignet sind z.B. Ethylen/Octen-Copolymere oder Ethylen/Hexen-Copolymere mit einem hohen Anteil von Octen oder Hexen (z.B. die Handelsprodukte Affinity® oder Engage® der DOW Chemical Co.)

Bei einer anderen Ausführungsform der Erfindung handelt es sich bei der Komponente P2 um Ionomere. Dies sind im allgemeinen Polyolefine, wie sie vorstehend beschrieben wurden, insbesondere Polyethylen, die Monomere mit Carboxylgruppen einpolymerisiert enthalten, z.B. Acrylsäure, Methacrylsäure und ggf. weitere copolymerisierbare Monomere. Die Säuregruppen werden im allgemeinen mit Hilfe von Metallionen wie beispielsweise Na-, Ca-, Mg- und Al-Ionen in ionische, evtl. ionisch vernetzte Polyolefine umgewandelt, die sich jedoch noch thermoplastisch verarbeiten lassen (vgl. z.B. US-PSen 3,264,272; 3,404,134; 3,355,319; 4,321,337). Es ist jedoch nicht unbedingt erforderlich, die Säuregruppen enthaltenden Polyolefine mittels Metallionen umzuwandeln. Auch freie Säuregruppen enthaltende Polyolefine, die dann im allgemeinen einen kautschukartigen Charakter besitzen und teilweise noch weitere copolymerisierbare Monomere enthalten, z.B. (Meth)acrylate, sind als erfindungsgemäße Komponente P2 geeignet.

Als Komponente P2 können weiterhin aromatische Polyetherketone eingesetzt werden, wie sie z.B. beschrieben sind in der GB-PS 1 078 234, der US-PS 4,010,147, der EP-A-135 938 und in der Publikation von C. K. Sham et. al., Polymer 29/6, 1016-1020 (1988). Diese Polyetherketone können erhalten werden, indem man Bisphenole mit Bis (halogenaryl)ketonen in polaren aprotischen Lösungsmitteln in Gegenwart von Alkalicarbonaten, z.B. Lithiumcarbonat, umsetzt. Ein typisches derartiges Umsetzungsprodukt ist z.B. das aus Hydrochinon und 4,4'-Difluorbenzophenon gebildete Produkt.

Als Komponente P2 sind weiter geeignet die Polyarylensulfide, insbesondere das Polyphenylensulfid. Dessen Herstellung ist beispielsweise beschrieben in US-PS 3,354,129, 3,786,035 und EP-A-171 021.

Als Komponente P2 der erfindungsgemäßen thermoplastischen Formmassen werden auch thermoplastische Polyurethane verwendet.

Thermoplastische Polyurethane und Verfahren zu ihrer Herstellung sind bekannt und beispielsweise in der DE-A-36 28 562 beschrieben.

Weiterhin geeignet sind selbstverstärkende kristalline Polyarylate (LCP's = liquid crystalline polymers), lineare Polyimide, Polybenzimidazole, Polyhydantoine, Polypyrrole, Polyphosphazene, Silicone.

Selbstverständlich können die thermoplastischen Elastomeren P1 auch in duroplastische Werkstoffe P2 eingebaut werden, wie beispielsweise in Phenol-, Kresol-, Xylenol- und Resorcinharze, Harnstoff- und Melaminharze, Furanharze, vernetzte Polymethacrylate, ungesättigte Polyesterharze, Phenoacrylatharze, Epoxidharze, Isocyanatharze (Polyurethan-Vorprodukte) sowie sog. "Hybrid"-Präpolymere aus den vorstehend genannten Gruppen.

Weiterhin als Mischungspartner P2 seien genannt: Allylesterharze; Polyurethane, z.B. halbharte RIM- (Reaction injection molding)-Teile, harte und halbharte Integralschaum-RIM-Systeme, harte und elastomere Polyurethan-Gießharze, harte bis weiche Schäume.

Die thermoplastischen Elastomeren P1 können weiterhin verwendet werden als Komponente in Prepregs (sheet moulding compounds, SMC); bulk moulding compounds (BMC) mit z.B. Polyester-, Phenacrylat-, Diallylphthalat- oder Siliconharz-Matrix; weiterhin in glasfaserverstärkten Matten (GFK), Halbzeugen und Fertigteilen.

Als Komponente P2 der erfindungsgemäßen Mischung können mit besonderem Vorteil auch nicht-kristalline Copolymerisate wie Methacrylat-Acrylat-Styrol-Polymerisate, Acrylnitril-Butadien-Styrol-Polymerisate (ABS), Acrylnitril-Styrol-Acrylester-Polymerisate (ASA), Methacrylat-Butadien-Styrol-Polymerisate (MBS), schlagfestes Polystyrol (HIPS), aber auch Homopolymerisate wie Polystyrol, Polymethylmethacrylat (PMMA), Polyacrylnitril, Polymethacrylimid. Solche Polymerisate bestehen z.B. im Falle von ABS, ASA, MBS, aber auch im Falle von schlagfestem Polystyrol aus zwei Phasen, einer kontinuierlichen (oft als Hartphase oder Matrix bezeichnet) und einer dispersen (meistens als Kautschuk- oder Weichphase bezeichnet). Bei den einphasigen Polymeren fehlt in der Regel die disperse weiche Kautschukphase. Erfindungsgemäße Komponenten P2 sind somit einphasige Polymere, bestehend nur aus Hartphase (wie z.B. Polystyrol oder PMMA), zweiphasige Polymere (z.B. ABS, ASA, MBS, schlagfestes Polystyrol), aber auch nur die Weichphasen (z.B. der in ABS, ASA, MBS, schlagfestem Polystyrol enthaltene Kautschuk) in ungepfropfter, gepfropfter, reiner oder angereicherter Form.

Erfindungsgemäße schlagfeste Polystyrole und Standard-Polystyrole, deren Herstellung, Struktur und Eigenschaften sind in der Übersichtsliteratur (A.Echte, F.Haaf, J.Hambrecht in Angew. Chem. (Int.Ed.Engl.) 20, 344-361, (1981); sowie Kunststoffhandbuch, Band Polystyrol, Carl Hanser Verlag (1968) eingehend beschrieben. Darüber hinaus können die verwendeten schlagzähen Polystyrole durch die Verwendung spezieller Polybutadien-Kautschuke z. B. mit gegenüber herkömmlichen Kautschuken veränderten 1,4-cis- bzw. 1,4-trans-Anteil oder 1,2 und 1,4-Verknüpfungsanteil strukturell verändert sein. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden. Geeignetes Standard-Polystyrol wird nach dem Verfahren der anionischen bzw. radikalischen Polymerisation hergestellt. Die durch das Polymerisationsverfahren beeinflußbare Uneinheitlichkeit des Polymerisats ist dabei von untergeordneter Bedeutung. Bevorzugt werden Standard-Polystyrol und schlagzähes Polystyrol, deren toluollöslicher Anteil ein mittleres Molekulargewicht $M_w$ von 50.000 bis 500.000 g/mol aufweist und die gegebenenfalls noch mit Additiven, wie beispielsweise Mineralöl, Stabilisator, Antistatika, Flammschutzmittel oder Wachsen ausgerüstet sind.

Geeignete Monomere zur Bildung der Hartphase können beispielsweise aus den im folgenden aufgeführten Monomeren ausgewählt sein: Styrol und seine substituierten Derivate, wie z.B. α-Methylstyrol, α-Chlorstyrol, p-Chlorstyrole, 2,4-Dichlorstyrol, p-Methylstyrol, 3,4-Dimethylscyrol, p-tert.-Butylstyrol, o- und p-Divinylbenzol, p-Methyl-α-Methylstyrol und p-chlor-α-Methylstyrol. Bevorzugt sind Styrol und α-Methylstyrol.

Unter Acryl- und Methacrylverbindungen sind Monomere zu verstehen wie z.B. Acrylnitril, Methacrylnitril, Acryl- und Methacrylsäure, Methylacrylat, Ethylacrylat, n- und Isopropylacrylat, n- und i-Butylacrylat, t-Butylacrylat, 2-Ethylhexylacrylat, Methyl-methacrylat, Ethylmethacrylat, n- und i-Propylmethacrylat, n- und i-Butylmethacrylat, t-Butylmethacrylat, cyclohexylmethacrylat, Isobornylmethacrylat, Maleinsäureanhydrid und dessen Derivate, wie Maleinsäureester, Maleinsäurediester und Maleinimid, z.B. Alkyl- und Acrylmaleinimide, wie beispielsweise Methyl- oder Phenylmaleinimid, bevorzugt Acrylnitril, Methylmethacrylat, Maleinsäureanhydrid und Phenylmaleinimid.

Beispiele für geeignete Homo- bzw. Copolymerisate sind Polystyrol, Polymethylmethacrylat, Styrol-Acrylnitril-Copolymere, α-Methylstyrol-Acrylnitril-Copolymere, Styrol-Maleinsäureanhydrid-copolymere, Styrol-Phenylmaleinimid-Copolymere, Styrol-Methylmethacrylat-copolymere, Methylmethacrylat-Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-t-Bucylmethacrylat-Copolymere, Styrol-Acrylnitril-t-Butylmethacrylat-Co-polymere.

Erfindungsgemäße Komponenten P2 sind ferner beispielsweise Polycarbonat oder Mischungen aus Polycarbonat mit mehreren der nachstehend beschriebenen Pfropfcopolymeren und Thermoplasten. Bevorzugt liegt hierbei der Anteil an Polycarbonat zwischen 5 und 95 Gew.-% und der Anteil der Komponenten B1 + B2 zwischen 5 und 95 Gew.-%. Solche Mischungen sind schon im Handel, beispielsweise unter der Handelsbezeichnung Bayblend® (Bayer) oder Terblend®s (BASF). Es handelt sich dabei um Mischungen eines Polycarbonats mit einem ABS- bzw. ASA-Polymerisat.

Als Thermoplaste P2 können auch Polycarbonat-Polysiloxan-Blockcopolymere, Polycarbonat-Polyether-Blockcopolymere und Polycarbonat-Polyester-Blockcopolymere dienen.

Erfindungsgemäß sind weiter als Thermoplaste aromatische Polyestercarbonate einsetzbar. Sie bestehen aus mindestens einem aromatischen Bisphenol der allgemeinen Formel (I) aus mindestens einer aromatischen Dicarbonsäure und gegebenenfalls aus Kohlensäure bzw. deren Derivate, wie Phosgen, Dialkyl- und Diarylcarbonat. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4.4,-Diphenyldicarbonsäure, 4,4'-Benzophenondicarbonsäure, 3,4,-Benzophenondicarbonsäure, 4,4'-Diphenyletherdicarbonsäure, 4,4, -Diphenylsulfondicarbonsäure, 2,2-Bis(4-carboxyphenyl)propan, Trimethyl-3-phenylindan-4,5-dicarbonsäure.

Weiterhin verwendet werden können als erfindungsgemäße Hartkomponente halogenierte Polymere wie Polyvinylidenchlorid, Polyvinylchlorid (PVC). PVC wird bevorzugt modifiziert eingesetzt. Zur Modifizierung werden niedermolekulare Weichmacher (z.B. Dioctylphthalat, Dioctyladipat) und/oder polymere Verbindungen eingesetzt.

PVC kann durch Polymerisation in Suspensions-, Emulsions- oder Masseverfahren hergestellt werden. Mischungen von PVC mit Weichmachern enthalten in der Regel noch Verarbeitungsstabilisatoren.

Ohne Weichmacher verarbeitbares PVC wird bevorzugt durch (Suspensions-)Pfropfpolymerisation von Vinylchlorid auf einen Elastomer hergestellt. Der Elastomer kann aus Polybutadien- und/ oder Polyacrylatkautschuk bestehen.

Weiterhin können eingesetzt werden: Chloriertes Polyethylen, chloriertes-Polypropylen, Polyisobutylen, Polyvinylacetat, Polyvinylalkohol, Polyvinylether, Polymethylpenten, Polytetrafluorethylen, Tetrafluorethylen-Perfluorpropylen-Copolymerisate, Copolymerisate von Tetrafluorethylen und Perfluoralkylvinylether, Ethylen-Tetrafluorethylen-Copolymerisate, Polyvinylidenfluorid, Polyvinylfluorid, Polychlortrifluorethylen, Ethylen-Chlortrifluorethylen-Copolymere.

Geeignet sind ferner Cellulose-Abkömmlinge wie Celluloseacetat, Cellulosepropionat, Celluloseacetobutyrat.

Polyphenylenether P2 sind an sich bekannt.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol.

Selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether), Poly(2,6-dimethoxi-1,4.phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2,6-di-benzyl-1,4-phenylenether), Poly(2-ethoxi-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl)-1,4-phenylenether), Poly (2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,2 bis 0,7 dl/g, gemessen in Chloroform bei 30°C, aufweisen.

Diese Grenzviskosität entspricht einem mittleren Molekulargewicht (Gewichtsmittel) $\overline{M}_w$ von 10.000 bis 50.000, bevorzugt 25.000 bis 50.000 und insbesondere 40.000 bis 50.000.

Als bevorzugte Polymermischungen mit Polyphenylenethern P2 seien genannt:

P1) 1 bis 80 Gew.-%, vorzugsweise 2 bis 60 und insbesondere 3 - 40 Gew.%
P2) 5 bis 99 Gew.%, vorzugsweise 20 bis 98 und insbesondere 30 - 97 Gew.-% eines Polyphenylenethers, welcher

gegebenenfalls bis zu 95 Gew.-%, vorzugsweise bis zu 50 Gew.-% durch ein vinylaromatisches Polymer und/oder ein Polyamid ersetzt sein kann.

In Polyphenylenether/Polyamidmiscnungen wird vorzugsweise ein modifizierter Polyphenylenether eingesetzt, der durch Umsetzen von

a) 59,95 bis 99,95 Gew.-% eines unmodifizierten Polyphenylenethers,

b) 0 bis 40 Gew.-% eines vinylaromatischen Polymeren,

c) 0,05 bis 5 Gew.-% mindestens einer Verbindung aus der Gruppe gebildet aus

$c_1$) einer $\alpha,\beta$-ungesättigten Dicarbonylverbindung,

$c_2$) eines Amid-Gruppen enthaltenden Monomeren mit einer polymerisierbaren Doppelbindung und

$c_3$) eines Lactam-Gruppen enthaltenden Monomeren mit einer polymerisierbaren Doppelbindung,

d) 0 bis 5 Gew.-% eines Radikalstarters

wobei sich die Gewichtsprozente auf die Summe von a) bis d) beziehen, im Verlaufe von 0,5 bis 15 Minuten bei 240 bis 375°C in geeigneten Misch- und Knetaggregaten wie Zweischneckenextrudern erhältlich ist.

Als Komponente P2 können natürlich auch Polymere Verwendung finden, die der Komponente P1 strukturell ähnlich sind. Beispielsweise können dies lineare und/oder sternförmige Styrol-Butadien-Blockcopolymerisat-Werkstoffe wie Styrolux® der BASF, K-Resin® der Phillips Petroleum oder Finaclear® der Fina sein.

Als geeignet haben sich auch solche Polymere erwiesen, die einen besonders langen Block S (in der Regel Polystyrolblock S) besitzen und damit als eine Art "Verträglichkeitsvermittler" zwischen Komponente P1 und z.B. den oben genannten linearen und/oder sternförmigen Styrol-Butadien-Blockcopolymerisat-Werkstoffen, Polystyrolen (glasklar oder schlagfest), etc. dienen können.

Als Weichphase können die einschlägig üblichen Kautschuke Verwendung finden. Es können beispielsweise Naturkautschuk, Epichlorhydrin-Kautschuke, Ethylen-Vinylacetat-Kautschuke, Polyethylenchlorsulfonkautschuke, Siliconkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke verwendet werden. Bevorzugt wird Acrylatkautschuk, Ethylen-Propylen-(EP-)-Kautschuk, Ethylen-Propylen-Dien (EPDM-1-Kaucschuk, insbesondere Butadien-Isopren-Kautschuk, Dienkautschuk oder Siliconkautschuk eingesetzt.

Bei den Acrylatkautschuken handelt es sich i.a. um Alkylacrylat-Kautschuke aus einem oder mehreren $C_4$-$C_8$- Alkylacrylaten, wobei bevorzugt mindestens teilweise Butyl-, Hexyl-, Octyl- oder 2-Ethylhexylacrylat verwendet worden sind. Diese AlkylacrylatKautschuke können bis zu 30 Gew.-% harte Polymere bildende Monomere wie Vinylacetat, (Meth)acrylnitril, Styrol, substituiertes Styrol, Methylmethacrylat, Vinylether einpolymerisiert enthalten. Die Acrylatkautschuke enthalten weiterhin bis zu 10 Gew.-%, vorzugsweise 1 bis 5 Gew.-% an vernetzend wirkenden, polyfunktionellen Monomeren (Vernetzungsmonomere). Beispiele hierfür sind Monomere, die zwei oder mehr zur Copolymerisation befähigte Doppelbindungen enthalten.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitrils, Methacrylnitril, Acrylsäure, Methacrylsäure, Acrylsäurebutylester, Acrylsäureethylhexylester und Methylmethacrylat). Besonders bevorzugte Dien-Kautschuke sind handelsübliche Butadien-, Butadien-Styrol-, Butadien-Methylmethacrylat-, Butadien-Acrylsäurebutylester- und Butadien-Acrylnitril-Kautschuke (z.B. Cariflex® der Shell; Finaprene® der Fina; Tufprene® der Asahi; Exxellor® der Exxon; Europrene® der Enichem etc.; die vorstehenden Firmenbezeichnungen sind abgekürzt).

Geeignete Siliconkautschuke können z.B. vernetzte Siliconkautschuke aus Einheiten der allgemeinen Formeln $R_2SiO$, $RSiO_{3/2}$, $R_3SiO_{1/2}$ und $SiO_{2/4}$ sein, wobei R einen einwertigen Rest darstellt. Die Menge der einzelnen Siloxaneinheiten sind dabei so bemessen, daß auf 100 Einheiten der Formel $R_2SiO$ bis 10 Mol-Einheiten der Formel $RSiO_{3/2}$, bis 1,5 Mol-Einheiten $R_3SiO_{1/2}$ und bis 3 Mol-Einheiten $SiO_{2/4}$ vorhanden sind. R kann dabei entweder ein einwertiger gesättigter Kohlenwasserstoffrest mit 1 bis 18 C-Atomen, der Phenylrest oder Alkoxy-Rest oder eine radikalisch leicht angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Phenyl.

Bei der Weichkomponente kann es sich auch um ein mehrstufig aufgebautes Polymerisat handeln (sog. "Kern/ Schale-Aufbau", "core/ shell morphology"). Beispielsweise kann ein kautschukelastischer Kern (Glastemperatur $T_G$ <5°C) von einer "harten" Schale (Polymere mit $T_G$ >5°C) oder umgekehrt umhüllt sein.

Die erfindungsgemäßen Komponenten P1 und P2 sind in praktisch jedem beliebigen Mischungsverhältnis herstellbar, z.B. von 0,1 bis 99,9 Gew.-% $P_1$, bevorzugt 10 bis 90 Gew.-% $P_1$ und 0,1 bis 99,9 Gew.-% $P_2$, bevorzugt 10 bis 90 Gew.-% $P_2$.

Als Komponente P3) können die erfindungsgemäßen Polymermischungen weitere Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 70 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt bis zu 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid). Zur besseren Folienverarbeitung können in Mengen bis zu 0,1 Gew.-% Antiblockmittel auf mineralischer Basis den erfindungsgemäßen

Formmassen zugesetzt werden. Als Beispiele seien amorphe oder kristalline Kieselsäure, Calciumcarbonat oder Aluminiumsilikat genannt.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

Die Herstellung der erfindungsgemäßen Formmassen kann nach an sich bekannten Verfahren erfolgen. Nach einer bevorzugten Ausführungsform erfolgt die Herstellung durch Zugabe der Komponente $P_1$) sowie gegebenenfalls $P_3$), zur Schmelze der Komponente $P_2$).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die erfindungsgemäßen Polymermischungen zeichnen sich durch gute mechanische Eigenschaften (Steifigkeit, Zähigkeit), gute Wärmeformbeständigkeit und eine geringe Schwindung bei der Verarbeitung zu Formkörpern jeglicher Art aus.

Demzufolge eignen sie sich zur Herstellung von Formteilen und Halbzeugen jeglicher Art wie Walzfelle, Faltenbalgen, Gummibälgen, Matten, Decken, Fußbodenbelägen, Schuhsohlen, Teppichbodenrückseiten, Kunstleder, Blasformkörper, Profilextrudate, Spritzgußformkörper, Rohrextrudate sowie 3 dimensionale Blasformkörper.

Beispiele

Komponente- P1

Die Herstellung der Komponenten P 1-1 bis P1-3 erfolgte gemäß DE-A 44 20 952:

Ein beheiz- und kühlbarer 50 1-Edelstahlreaktor, der mit einem Kreuzbalkenrührer ausgerüstet war, wurde durch Spülen mit Stickstoff, auskochen mit einer Lösung von sec-Butyllithium und 1,1-Diphenylethylen in Cyclohexan (Molverhältnis 1:1) und trocknen vorbereitet.

Anschließend wurden 22,8 1 Cyclohexan eingefüllt und 42 ml s-Butyllithium als Initiator, 65,8 ml Tetrahydrofuran und Styrol (S) und Butadien (B) in den in der nachstehenden Tabelle 1 angegebenen Mengen (g) und nach dem angegebenen Zeittaktprogramm zugesetzt. Angegeben ist auch die Polymerisationsdauer t in Minuten sowie Anfangs- und Endtemperatur $T_A$ bzw. $T_E$ (in °C), wobei darauf hinzuweisen ist, daß die Polymerisationsdauer stets groß gegen die Dauer des Monomerzulaufs war.

Die Temperatur des Reaktionsgemisches wurde durch Heizung oder Kühlung des Reaktormantels gesteuert. Nach Umsetzungsende (Verbrauch der Monomeren) wurde mit Ethanol, bis zur Farblosigkeit titriert und die Mischung mit einem 1,5-fachen Überschuß an Ameisensäure sauer gestellt. Zuletzt wurden 34 g eines handelsüblichen Stabilisators 2-t-butyl-6-(3-t-butyl-2-hydroxy-5-methylbenzyl)-4-methylphenylacrylat (Irganox® 3052; Ciba-Geigy, Basel) und 82 g Trisnonylphenylphosphit zugesetzt.

Die Lösung wurde auf einem Entgasungsextruder (drei Dome, Vorwärts- und Rückwärtsentgasung) bei 200°C aufgearbeitet und granuliert. Das Granulat wurde in einem Fluidmischer mit 10 g Bisstearylamid (Acrawax) als Außenschmierung versetzt.

Tabelle 1

| | Komponente P1-1 | Komponente P1-2 | Komponente P1-3 |
|---|---|---|---|
| THF (ml) | 65,8 | 65,8 | 65,8 |
| s-BuLi (ml) | 42 | 42 | 42 |
| Styrol 1 (g)<br>T(A)/T(E) (°C)<br>Zeit (min) | 1008<br>30/77<br>12 | 1008<br>30/70<br>30 | 1008<br>30/70<br>30 |
| Butadien 1 (g)<br>Styrol 2 (g)<br>T(A)/T(E) (°C)<br>Zeit (min) | 1120<br>1412<br>77/102<br>14 | 1120<br>1412<br>68/96<br>17 | 1120<br>1412<br>68/96<br>17 |
| Butadien 2 (g)<br>Styrol 3 (g)<br>T(A)/T(E) (°C)<br>Zeit (min) | 1120<br>1412<br>73/95<br>10 | 1120<br>1412<br>60/84<br>12 | 1772<br>760<br>60/89<br>16 |
| Butadien 3 (g)<br>Styrol 4 (g)<br>T (A)/T(E) (°C)<br>Zeit (min) | 1120<br>1412<br>74/88<br>26 | 1120<br>1412<br>64/83<br>6 | 1120<br>1412<br>64/83<br>6 |
| Styrol 5 (g)<br>T(A)/T(E) (°C)<br>Zeit (min) | 1008<br>74/85<br>14 | 1008<br>70/76<br>14 | 1008<br>70/76<br>14 |
| Mn (g/mol)<br>Mp (g/mol)<br>Mw (g/mol) | 119 000<br>158 000<br>180 000 | 107 000<br>141 000<br>159 000 | 118 000<br>156 000<br>176 000 |

Komponente P2

P2-1: Lineares Styrol-Butadien-Styrol-Dreiblockcopolymer mit scharf getrennten Blockübergängen mit einem Polybutadiengehalt von 26 Gew.-% und $M_w$ von 90000 g/mol mit einem MVR 1200°C/5 kg) von 25 ml/10'. (Styrolux® KR 2691, BASF AG)

P2.2: ABS-Polymerisat:

70 Gew.-% eines Styrol/Acrylnitril (SAN) Copolymeren (Hülle) (Styrol/Acrylnitril:67/33 Gew.%), VZ = 80 ml/g (gemessen 0,5 %ig in Toluol bei 23°C)
30 Gew.-% eines Pfropfcopolymeren aus (Kern)

60 Gew.-% Polybutadien (vernetzt) gepfropft mit
40 Gew.-% Styrol/Acrylnitrilcopolymer (70/30)
(Terluran® 967 K, BASF AG)

P2-3: Hochdruck-Polyethylen mit einem Schmelzindex MFI(190°C/2,16 kg) von 1,5 g/10', Dichte: 0,919 $g/cm^3$ (Lupolen® 1800, BASF AG)

P2-4: Polystyrol mit einer VZ von 74 ml/g (gemessen als 0,5 %ige Lösung in Toluol bei 23°C), MVR (200°C/5 kg) : 25 ml/10' (Polystyrol 144C, BASF AG)

P2-5: Schlagfestes Polystyrol (HIPS) mit einem Polybutadiengehalt von 8 Gew.-%, Zellteilchenmorphologie mit einer mittleren Teilchengröße der Weichphase von 2,5 µm (VZ = 70 ml/g; 0,5 %ig in Toluol bei 23°C; Polystyrol 476L, BASF AG)

P2-6: SAN Copolymer (75/25) mit einer VZ von 60 ml/g (0,5 %ig in Toluol bei 23°C) MVR (200°C/21,6 kg) = 27 ml/10' (Luran® 358 N, BASF AG)

P2-7: Polycarbonat (aus Bisphenol A) mit einer VZ von 62 ml/g (0,5 %ig bei 23°C in Chloroform) MVR (260°/5 kg) = 8 ml/10' (Makrolon® 2800, Bayer AG)

P2-8: Polypropylen mit einem Schmelzpunkt von 162°C, Schmelzindex MVR (230°C/2,16 kg): 2,4 ml/10', Dichte: 0,907 g/ml (Novolen® 1100, BASF AG)

P2-9: Styrol/Methylmethacrylatcopolymer (70/30) mit MVR (200°C/5 kg) von 4 ml/10'

P2-10 polymethylmethacrylat mit einem MVR (230°C/3,8 kg) von 2 ml/10', (Lucryl® 688, BASF AG)

Herstellung der Polymermischungen

Die Mischungen von P1 und P2 wurden jeweils bei 200 bis 250°C auf einem Einschneckenextruder compoundiert, granuliert und anschließend zu Probekörpern verspritzt.
An 4 mm dicken Zugstäben wurde die Wärmeformbeständigkeit (Vicat B nach ISO 306), Reißdehnung (Zugversuch nach ISO 527) und die Charpy-(Kerb-)schlagzähigkeit nach ISO 179/1 eU gemessen sowie ferner der Schmelzflußindex MVR nach ISO 1133 bestimmt.
Die Zusammensetzungen der Mischungen und die Ergebnisse sind der Tabelle 2 zu entnehmen.

Tabelle 2

| Bsp. | Zusammensetzung [Gew.-%] | Vicat B [°C] | MVR 200/5 (200°C/5kg) [cm³/10min] | Zugversuch E-Modul [N/mm²] | Strecksp. [N/mm²] | Reiß-fest. [N/mm²] | Reißd. [%] | Arbeit bis Bruch [Nmm/mm²] | Charpy-Schlagzähigkeit Iso 179/1 eU + 23°C [KJ/m²] | Charpy-Schlagzähigkeit Iso 179/1 eA + 23°C [KJ/m²] |
|---|---|---|---|---|---|---|---|---|---|---|
| 1 | 10 P1-2<br>90 P2-9 | 95,4 | 3,4 | 3119 | 0 | 63,9 | 3 | 61,9 | 42,8 | 2,4 |
| 2 | 10 P1-2<br>90 P2-6 | 103 | 2,9 | 3309 | 0 | 69,5 | 3 | 62,1 | 30 | 2,4 |
| 3 | 10 P1-2<br>90 P2-8 | 90,3 | 34,5 | 1393 | 30,7 | 16,4 | 333,7 | 3862,4 | | 5,2 |
| 4 | 10 P1-2<br>90 P2-5 | 87,2 | 6,5 | 1631 | 22,4 | 23,9 | 618,6 | 618,4 | | 16,4 |
| 5 | 10 P1-2<br>90 P2-10 | 105,7 | 0,53 | | | | | | | |
| 6 | 25 P1-2<br>75 P2-9 | 91,2 | 4,8 | 2351 | 49,6 | 49,7 | 3,5 | 60,9 | 35,9 | 2,8 |
| 7 | 25 P1-2<br>75 P2-6 | 99,6 | 4,4 | 2420 | 51 | 44,6 | 7,1 | 147,6 | 47,6 | 2,9 |

| Bsp. | Zusammensetzung [Gew.-%] | Vicat B | MVR 200/5 (200°C/5kg) | Zugversuch | | | | | Charpy-Schlagzähigkeit Iso 179/1 eU + 23°C | Charpy-Schlagzähigkeit Iso 179/1 eA + 23°C |
|---|---|---|---|---|---|---|---|---|---|---|
| | | | | E-Modul | Strecksp. | Reiß-fest. | Reißd. | Arbeit bis Bruch | | |
| | | [°C] | [$cm^3$/10min] | [N/$mm^2$] | [N/$mm^2$] | [N/$mm^2$] | [%] | [Nmm/$mm^2$] | [KJ/$m^2$] | [KJ/$m^2$] |
| 8 | 25 P1-2<br>75 P2-8 | 76 | 32 | 1069 | 22,6 | 17,5 | 114 | 1258,2 | - | 7,7 |
| 9 | 25 P1-2<br>75 P2-5 | 78,5 | 7,3 | 1304 | 20,7 | 21,9 | 83,4 | 833,9 | - | - |
| 10 | 25 P1-2<br>75 P2-10 | 99,9 | 0,9 | - | - | - | - | - | - | - |
| 11 | 20 P1-2<br>80 P2-1 | 53 | 21 | - | - | - | 69 | - | - | - |
| 12 | 20 P1-2<br>80 P2-2 | 84 | 5,1 | - | - | - | 12 | - | - | - |
| 13 | 20 P1-2<br>80 P2-3 | 76*) | 12,2 | - | - | - | >400 | - | - | - |
| 14 | 20 P1-2<br>80 P2-4 | 68 | 23 | - | - | - | 60 | - | - | - |
| 15 | 20 P1-2<br>80 P2-7 | 139 | 1,1 | - | - | - | 13 | - | - | - |

*) Vicat A [°C]

Polyphenylenethermischungen

Die Komponenten P1-1 bis P1-3 entsprachen den Beispielen 1-15.

Komponente P2

P2-11: Polyamid 66 mit einem Zahlenmittel des Molekulargewichts von 22000 g/mol (Ultramid® A3, BASF AG) relative Viskosität = 2,6 (gemessen als 1%ige Lösung in konzentrierter Schwefelsäure bei 25°C).

P2-12: Poly-(2,6-dimethyl-1,4-phenylenether) mit einem $M_w$ von 40 000 g/mol

P2-13 ein modifizierter Polyphenylenether aus: 90 Gew.-% Poly(2,6-dimethyl-1,4-phenylenether) mit einer reduzierten spezifischen Viskosität von 0,6 dl/g (gemessen als 1%ige Chloroform-Lösung bei 25°C), 8 Gew.-% Polystyrol (MFI bei 200°C/5 kg Belastung = 24 g/10 min), 1,95 Gew.-% Fumarsäure und 0,05 Gew.-% 3,4-Dimethyl-3,4diphenylhexan wurden in einem Zweischneckenextruder (ZSK 30, Fa. Werner & Pfleiderer) dosiert, in einem ersten Teil unter Verwendung von Knetelementen bei 280°C umgesetzt und anschließend in einer Entgasungszone bei 300°C im Vakuum entgast. Die mittlere Verweilzeit im Extruder betrugt 1,5 min.

P2-14 Schlagfestes Polystyrol mit 9 Gew.-% Polybutadien und Zellteilchenmorphologie, mittlere Teilchengröße der Weichkomponente von 1,9 µm. Die VZ der Hartmatrix betrug 80 ml/g (0,5 %ig in Toluol bei 23°C).

P2-15 Schlagfestes Polystyrol mit 17 Gew.-% Polybutadien und Zellteilchenmorphologie. Die mittlere Teilchengröße der Weichkomponente betrug 3,5 µm, die VZ der Hartmatrix betrug 80 ml/g (0,5%ig in Toluol bei 23°C).

P2-16 Schlagfestes Polystyrol mit 9 Gew.-% Polybutadien, VZ: 79 ml/g (0,5%ig in Toluol bei 23°C) Die mittlere Teilchengröße der Weichkomponente betrug 1,0 µm.

P2-17 (Vergleichskomponente gemäß DE-A 41 29 499): Styrol-Butadien-Blockkautschuk (Tufprene®A', Asahi) mit der Blockfolge S.B-S'-B', einem Styrolgehalt von 41 Gew.-% und einer Härte nach Shore A von 87 (DIN 53505)

P2-18 (Vergleichskomponente gemäß WO 87/5311): Styrol-Butadien-Blockkautschuk (Cariflex® TR 1101, Shell) mit der Blockfolge S-B-S, einem Styrolgehalt von 31 Gew.-% und einer Härte nach Shore A von 72 (DIN 53505)

P2.19 Styrol-Butadien-Sternpolymer mit einem Styrolgehalt von 68 Gew.-% (Styrolux KR 2686, BASF AG)

Komponente P3

P3-1 Rußbatch 15 Gew.-% in Polystyrol Rußtyp: Black Pearls 880 der Firma Cabot

Herstellung der Formmassen:

Die Komponenten P1 bis P3 wurden auf einem Zweischneckenextruder (ZSK 30, W&P) bei einer Zylindertemperatur von 290°C gemischt und zu einer homogenen Schmelze verarbeitet. Die Komponente P1 wurde mittels einer Stopfschnecke kalt zur Schmelze von P2 und P3 zugegeben. Die Polymerschmelze wurde entgast, extrudiert, durch ein Wasserbad geleitet, granuliert und getrocknet. Das Material wurde anschließend bei 280/80°C (Massetemperatur/Werkzeugoberflächentemperatur) zu den gewünschten Prüfkörpern verspritzt.

Materialprüfung

Die freie Schwindung wurde an spritzgegossenen Platten der Größe 110 x 110 x 2 mm mit zentralem Anguß bestimmt. Die freie Schwindung berechnet sich aus dem Vergleich der Abmessungen der Form und denen der Platte eine Stunde nach dem Spritzgußvorgang.
Die Schädigungsarbeit $W_{ges}$ (Rundscheiben) wurde nach DIN 53 443 bei 23°C bestimmt.
Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normalkleinstäben ermittelt.

Die Kerbschlagzähigkeit der Proben wurde nach ISO 179 1eA an ISO-Prüfkörpern ermittelt.

Die Zugfestigkeit der Proben wurde nach DIN 53 455 an Schulterstäben bestimmt.

Die Zusammensetzungen der Formmassen und die Ergebnisse der Messungen sind den Tabellen 3 und 4 zu entnehmen.

Tabelle 3

| Bsp. | Komponente P2-11 [Gew:%] | Komponente P2-13 [Gew.-%] | | Schwindung [%] |
|---|---|---|---|---|
| 16 | 50 | 40 | 10 P1-1 | 0.64/0.71 |
| 17 | 50 | 40 | 10 P1-3 | 0.68/0.70 |
| V1 | 50 | 40 | 10 P2-17 | 0.95/1.03 |
| V2 | 50 | 40 | 10 P2-18 | 0.97/1.05 |

Tabelle 4

| Bspiel Komponente [Gew.-%] | V3 | V4 | 18 | 19 | 20 | 21 | 22 | 23 | 24 |
|---|---|---|---|---|---|---|---|---|---|
| P2-12 | 35 | 35 | 35 | 35 | 35 | 35 | 35 | 35 | 36 |
| P2-14 | 52 | 52 | 52 | 52 | 52 | 52 | 49 | 49 | - |
| P2-15 | - | - | - | - | - | - | 3 | 3 | - |
| P2-16 | - | - | - | - | - | - | - | - | 44 |
| P1-1 | - | - | 9,7 | - | 4,9 | 4,9 | 9,7 | - | - |
| P1-3 | - | - | - | 9,7 | - | - | - | 9,7 | - |
| P1-2 | - | - | - | - | - | - | - | - | 20 |
| P2-18 | 9,7 | - | - | - | 4,8 | - | - | - | - |
| P2-19 | - | 9,7 | - | - | - | 4,8 | - | - | - |
| P3-1 | 3,3 | 3,3 | 3,3 | 3,3 | 3,3 | 3,3 | 3,3 | 3,3 | - |
| $W_s$ [Nm] | 35 | 36 | 36 | 36 | 34 | 32 | 35 | 35 | - |
| Vicat B [°C] | 125 | 125 | 127 | 128 | 127 | 126 | 126 | 127 | 107 |
| $a_k$ [kJ/m$^2$] | 22,7 | 22,7 | 23,0 | 2,0 | 23,0 | 21,1 | 24 | 24,7 | - |
| Zugfestigkeit [N/mm$^2$] | 48 | 48 | 55 | 55 | 53 | 55 | 54 | 54 | - |
| V = Vergleichsversuche | | | | | | | | | |

**Patentansprüche**

**1.** Polymermischungen, enthaltend

P1) 0.1-99.9 Gew. % eines kautschukelastischen Blockcopolymerisates aus 35 bis 85 Gew.-% an vinylaromatischen Monomer und 15 bis 65 Gew.-% Dien, wobei P1

α mindestens zwei Blöcke S, die einpolymerisierte Einheiten eines vinylaromatischen Monomeren und eine Glastemperatur über 25°C aufweisen und

β mindestens einen, zwischen den blocken S befindlichen, elastomeren Block B/S, der sowohl einpolymerisierten Einheiten eines vinylaromatischen Monomeren (S) als auch eines Diens (B) enthält, mit statistischem Aufbau und einer Glastemperatur Tg von -50 bis +25°C,

enthält,

und wobei die im Festkörper aus den Blöcken S gebildete Hartphase 1 - 40 Vol.-%, und die aus den Blöcken B/S gebildete Weichphase 60 - 99 Vol.-% betragen,

P2) 0.1 - 99.9 Gew.-% mindestens eines thermoplastisch verarbeitbaren oder duroplastischen Polymeren oder deren Mischungen und

P3) 0 - 70 Gew.-% weiterer Zusatzstoffe und Verarbeitungshilfsmittel,

wobei die Gewichtsprozente der Komponenten P1) bis P3) zusammen 100 % ergeben.

**2.** Polymermischungen nach Anspruch 1, enthaltend:

P1) 1 - 99 Gew.-% kautschukelastischen Blockcopolymerisats P1,
P2) 1 - 99 Gew.-% eines thermoplastische verarbeitbaren Polymeren P2.

**3.** Polymermischungen nach Anspruch 1 oder 2, in denen die $T_g$ der Hartphnase S des Blockcopolymerisats P1 über 50°C und $T_g$ der Weichphase B/S im Bereich von -50 bis +5°C liegt.

**4.** Polymermischungen nach den Ansprüchen 1 bis 3, in denen das vinylaromatische Monomere des Blockcopolymerisats P1 ausgewählt ist aus Styrol, alpha-Methylstyrol, Vinyltoluol oder Diphenylethylen oder deren Mischungen und das Dien aus Butadien oder Isopren oder deren Mischungen ausgewählt ist.

**5.** Polymermischungen nach den Ansprüchen 1 bis 4, in denen das Blockcopolymerisat nach den allgemeinen Formel (1) bis (11) aufgebaut ist

(1) $(S\text{-}B/S)_n$;

(2) $(S\text{-}B/S)_n\text{-}S$;

(3) $B/S\text{-}(S\text{-}B/S)_n$;

(4) $X\text{-}[(S\text{-}B/S)_n]_m+1$;

(5) $X\text{-}[(B/S\text{-}S)_n]_m+1$;

(6) $X\text{-}[(S\text{-}B/S)_n\text{-}S]_m+1$;

(7) $X\text{-}[(B/S\text{-}S)_n\text{-}B/S]_m+1$;

(8) $Y\text{-}[(S\text{-}B/S)_n]_m+1$;

(9) $Y\text{-}[(B/S\text{-}S)_n]_m+1$;

(10) $Y\text{-}[(S\text{-}B/S)_n\text{-}S]_m+1$;

(11) $Y\text{-}[(B/S\text{-}S)_n\text{-}B/S]_m+1$;

wobei

S einen vinylaromatischen Block,
B/S einen statistischen Block aus Dien- und vinylaromatischen Einheiten,
X den Rest eines n-funktionellen Initiators,
Y den Rest eines m-funktionellen Kopplungsmittels und
m,n natürliche Zahlen von 1 bis 10 bedeuten, mit der Maßgabe, daß in den Formeln (1), (3), (4) und (8) n mindestens 2 ist.

**6.** Polymermischungen nach den Ansprüchen 1 bis 5, enthaltend ein Blockcopolymerisat der allgemeinen Formel S-B/S-S, X-[-B/ S-S]$_2$ oder Y-[-B/S-S]$_2$.

**7.** Polymermischungen nach den Ansprüchen 1 bis 6, enthaltend ein Blockcopolymerisat, dessen Weichphase unterteilt ist in Blöcke

(12) $(B/S)_1[(B/S)_2$,

(13) $(B/S)_1[(B/S)_2[(B/S)_1$

oder

(14) $(B/S)_1[(B/S)_2[(B/S)_3$,

wobei die Indices 1,2,3 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen $(B/S)_1(B/S)_2$ kontinuierlich ändert, wobei die Glasübergangstemperatur $T_g$ jedes Teilblocks unter 25°C liegt.

**Claims**

**1.** A polymer mixture comprising

P1) from 0.1 to 99.9% by weight of an elastomeric block copolymer of from 35 to 85% by weight of vinylaromatic monomer and from 15 to 65% by weight of diene, where P1 comprises

α at least two blocks S which have, in their polymer chains, units of a vinylaromatic monomer, and have a glass transition temperature above 25°C and

β at least one elastomeric block B/S, situated between the blocks S, which contains, in its polymer chain, units both of a vinylaromatic monomer (S) and of a diene (B), with random construction and with a glass transition temperature Tg of from -50 to +25°C,

and where the proportion in the material of the hard phase formed from the blocks S from 1 to to 40% by volume, and that of the soft phase formed from the blocks B/S is from 60 to 99% by volume.

P2) from 0.1 to 99.9% by weight of at least one thermoplastically processable or thermosetting polymer or mixtures of these and

P3) from 0 to 70% by weight of other additives and processing aids,

where the total of the percentages by weight of components P1) to P3) is 100%.

**2.** A polymer mixture as claimed in claim 1, comprising

P1) from 1 to 99% by weight of elastomeric block copolymer P1,

P2) from 1 to 99% by weight of a thermoplastically processable polymer P2.

3. A polymer mixture as claimed in claim 1 or 2, in which the $T_g$ of the hard phase S of the block copolymer P1 is above 50°C and $T_g$ of the soft phase B/S is in the range from -50 to +5°C.

4. A polymer mixture as claimed in any of claims 1 to 3, in which the vinylaromatic monomer of the block copolymer P1 is selected from the group consisting of styrene, α-methylstyrene, vinyltoluene and diphenylethylene and mixtures of these, and the diene from the group consisting of butadiene and isoprene and mixtures of these.

5. A polymer mixture as claimed in any of claims 1 to 4, in which the block copolymer is built up according to the formula (1) to (11)

(1) $(S\text{-}B/S)_n$;

(2) $(S\text{-}B/S)_n\text{-}S$;

(3) $B/S\text{-}(S\text{-}B/S)_n$;

(4) $X\text{-}[(S\text{-}B/S)_n]_m+1$;

(5) $X\text{-}[(B/S\text{-}S)_n]_m+1$;

(6) $X\text{-}[(S\text{-}B/S)_n\text{-}S]_m+1$;

(7) $X\text{-}[(B/S\text{-}S)_n\text{-}B/S]_m+1$;

(8) $Y\text{-}[(S\text{-}B/S)_n]_m+1$;

(9) $Y\text{-}[(B/S\text{-}S)_n]_m+1$;

(10) $Y\text{-}[(S\text{-}B/S)_n\text{-}S]_m+1$;

(11) $Y\text{-}[(B/S\text{-}S)_n\text{-}B/S]_m+1$;

where

S is a vinylaromatic block,
B/S is a random block of diene units and vinylaromatic units,
X is the radical of an n-functional initiator,
Y is the radical of an m-functional coupling agent and
m,n are natural numbers from 1 to 10, with the proviso that in the formulae (1), (3), (4) and (8) n is at least 2.

6. A polymer mixture as claimed in any of claims 1 to 5, which contains a block copolymer of the formula S-B/S-S, $X\text{-}[\text{-}B/\ S\text{-}S]_2$ or $Y\text{-}[\text{-}B/S\text{-}S]_2$.

7. A polymer mixture as claimed in any of claims 1 to 6, which contains a block copolymer whose soft phase is subdivided into blocks

(12) $(B/S)_1[(B/S)_2$,

(13) $(B/S)_1[(B/S)_2[(B/S)_1$ or

(14) $(B/S)_1[(B/S)_2[(B/S)_3$,

where the indices 1, 2, 3 are different structures in the sense that the vinylaromatic/diene ratio is different in the individual blocks B/S or varies continuously within a single block within the limits $(B/S)_1(B/S)_2$, where the glass transition temperature $T_g$ of each sub-block is below 25°C.

## Revendications

**1.** Mélanges de polymères contenant

P1) à concurrence de 0,1 à 99,9% en poids, un copolymère séquencé manifestant une élasticité analogue à celle du caoutchouc constitué, à concurrence de 35 à 85% en poids, par un monomère vinylaromatique et, à concurrence de 15 à 65% en poids, par un diène, dans lequel P1 contient

α au moins deux séquences S qui présentent des unités d'un monomère vinylaromatique introduites par polymérisation, ainsi qu'une température de transition vitreuse supérieure à 25°C, et

β au moins uneséquenceélastomèreB/Sdisposée entre les séquences S, qui contient aussi bien des unités d'un monomère vinylaromatique (S) introduites par polymérisation qu'un diène (B), possédant une structure statistique et une température de transition vitreuse Tg de -50 à +25°C,

et dans lequel la phase dure formée par les séquences S dans le corps solide représente de 1 à 40% en volume et la phase tendre formée par les séquences B/S représente de 60 à 99% en volume,

P2) à concurrence de 0,1 à 99,9% en poids, au moins un polymère thermodurcissable ou apte à un traitement thermoplastique ou encore des mélanges de ces derniers, et

P3) à concurrence de 0 à 70% en poids, d'autres additifs et d'autres adjuvants de traitement,

dans lesquels les pour cent en poids des composants P1) à P3) représentent ensemble 100%.

**2.** Mélanges de polymère selon la revendication 1, contenant :

P1) à concurrence de 1 à 99% en poids, un copolymère séquencé P1) manifestant une élasticité analogue à celle du caoutchouc,

P2) à concurrence de 1 à 99% en poids, un polymère P2) apte à un traitement thermoplastique.

**3.** Mélanges de polymère selon la revendication 1 ou 2, dans lesquels la valeur Tg de la phase dure S du copolymère séquencé P1) est supérieure à 50°C et la valeur Tg de la phase tendre B/S se situe dans le domaine de -50 à +5°C.

**4.** Mélanges de polymère selon les revendications 1 à 3, dans lesquels le monomère vinylaromatique du copolymère séquencé P1) est choisi parmi le styrène, l'α-méthylstyrène, le vinyltoluène ou le diphényléthylène ou encore parmi leurs mélanges, et le diène est choisi parmi le butadiène ou l'isoprène ou encore parmi leurs mélanges.

**5.** Mélanges de polymère selon les revendications 1 à 4, dans lesquels la structure du copolymère séquencé répond aux formules générales 1 à 11:

(1) $(S\text{-}B/S)_n$;

(2) $(S\text{-}B/S)_n\text{-}S$;

(3) $B/S\text{-}(S\text{-}B/S)_n$;

(4) $X\text{-}[(S\text{-}B/S)_n]_{m+1}$ ;

(5) $X\text{-}[(B/S\text{-}S)_n]_{m+1}$ ;

(6) $X\text{-}[(S\text{-}B/S)_n\text{-}S]_{m+1}$ ;

(7) $X\text{-}[(B/S\text{-}S)_n\text{-}B/S]_{m+1}$;

(8) $Y\text{-}[(S\text{-}B/S)_n]_{m+1}$;

(9) $Y\text{-}[(B/S\text{-}S)_n]_{m+1}$;

(10) $Y\text{-}[(S\text{-}B/S)_n\text{-}S]_{m+1}$;

(11) $Y\text{-}[(B/S\text{-}S)_n\text{-}B/S]_{m+1}$

dans lesquelles

S représente une séquence vinylaromatique,
B/S représente une séquence statistique constituée par des unités diéniques et vinylaromatiques,
X représente le radical d'un initiateur n-fonctionnel,
Y représente le radical d'un agent de couplage m-fonctionnel, et
m, n représentent des nombres naturels de 1 à 10, avec cette mesure que dans les formules (1), (3), (4) et (8), n représente au moins 2.

**6.** Mélanges de polymères selon les revendications 1 à 5, contenant un copolymère séquencé répondant à la formule générale S-B/S-S, $X\text{-}[B/S\text{-}S]_2$ ou $Y\text{-}[B/S\text{-}S]_2$.

**7.** Mélanges de polymères selon les revendications 1 à 6, contenant un copolymère séquencé dont la phase tendre est subdivisée en séquences

(12) $(B/S)_1\text{-}(B/S)_2$;

(13) $(B/S)_1\text{-}(B/S)_2\text{-}(B/S)_1$

ou

(14) $(B/S)_1\text{-}(B/S)_2\text{-}(B/S)_3$

dans lesquelles les indices 1, 2, 3 représentent des structures différentes dans le sens où le rapport composé vinylaromatique/diène dans les séquences individuelles B/S est différent ou se modifie en continu à l'intérieur

d'une séquence dans les limites $(B/S)_1(B/S)_2$, la température de transition vitreuse $T_g$ de chaque séquence partielle étant inférieure à 25°C.